# FASCICULE DE BREVET EUROPEEN

(11) **EP 1 229 274 B1**
(45) Date de publication et mention de la délivrance du brevet: **10.12.2003**
(21) Numéro de dépôt: 02290231.6
(22) Date de dépôt: 01.02.2002
(51) Int. Cl.: F16H 63/30, F16H 61/32

(54) **Boîte de vitesses mécanique à actionneurs de passage**
Mechanisches Getriebe mit Schaltaktuator
Mechanical shifting device with shift actuator

(30) Priorité: 02.02.2001 FR 0101398
(43) Date de publication de la demande: 07.08.2002
(73) Titulaire: Renault s.a.s., 92100 Boulogne Billancourt (FR)
(72) Inventeur: Raoul, Michel, 78990 Elancourt (FR)

(56) Documents cités:
- FR-A- 2 754 956
- FR-A- 2 777 834
- US-A- 2 649 813

## Description

La présente invention concerne une boîte de vitesses mécanique, notamment pour véhicule automobile, comportant au moins un actionneur de passage capable de fournir l'énergie mécanique et la force nécessaires aux passages de vitesses.

Plus précisément, cette invention a pour objet une boîte de vitesses mécanique à actionneurs de passage comportant au moins une unité motrice capable de déplacer en rotation un axe de passage, et des moyens de couplage élastique entre l'unité motrice et l'axe de passage correspondant.

Cette invention concerne également un dispositif de couplage élastique entre une unité motrice et un axe de passage de boîte de vitesses à actionneurs de passage, comprenant un premier flasque libre en rotation sur cet axe, un second flasque solidaire en rotation du même axe, et un ensemble de ressorts d'accouplement élastique entre les deux flasques.

Elle trouve une application privilégiée, mais non limitative, sur une boîte de vitesses « robotisée », dans laquelle une partie des opérations de passage des vitesses est prise en charge par des systèmes d'actionnement électromécaniques placés sous le contrôle d'un calculateur.

Le document US-B-2 649 813 décrit les caractéristiques techniques exposées dans le préambule de la revendication 1.

Par la publication FR 2777 834, on connaît un système d'actionnement électromécanique pour boîte de vitesses comportant une unité motrice, associée d'une part à un système élastique d'emmagasinage de son énergie mécanique, apte à restituer cette énergie pour assurer sélectivement les dites commandes automatiques par d'une timonerie, respectivement de sélection et de passage, et d'autre part à un interrupteur de fin de course propre à provoquer l'apparition d'un signal représentatif, selon le cas, de l'état comprimé (emmagasinage d'énergie) dudit système élastique, de l'arrivée en butée de la dite unité motrice, ou du fait que la sélection ou l'engagement du rapport souhaité de la boîte a bien été obtenu.

Cette publication précise également que le système élastique, dont la précharge et la raideur sont connues, permettra ainsi de mieux maîtriser les efforts de sélection de même que les efforts de synchronisation lors du passage des vitesses, éventuellement en coopération avec un capteur de position de l'unité motrice à motoréducteur n'ayant pas à être asservie en effort, mais seulement en position ; le système élastique uniformise alors automatiquement les efforts demandés à l'unité motrice.

L'actionneur électromécanique décrit dans la publication FR 2777 834, dispose donc d'un système d'accumulation d'énergie à détente rapide et à arrêt contrôlé, permettant d'assurer le passage des vitesses sans accroissement de la puissance délivrée par l'unité motrice, ni ralentissement de celle-ci.

Toutefois un tel actionneur ne permet pas de contrôler en permanence l'effort appliqué au baladeur. En particulier, il n'est pas stable et irréversible dans toutes les positions du synchroniseur commandé par celui-ci. Il n'est donc pas capable d'assurer dans de bonnes conditions la commande d'un dispositif de synchronisation, et de transmission de couple par simple adhérence (sans crabotage du pignon fou par le baladeur), tel que décrit dans la publication FR 2754 956.

Cette publication divulgue notamment un synchroniseur dans lequel chaque anneau de synchronisation transforme le couple reçu d'un moyeu, en poussée axiale contre un pignon, de façon à transmettre lui-même le couple moteur à ce pignon en exerçant sur celui-ci une pression constante.

Un tel synchroniseur nécessite une commande très précise, et doit être stable et irréversible dans toutes les positions. Sa commande ne peut donc se satisfaire d'un actionneur électromagnétique connu, comme par exemple celui de la publication FR 2777834.

La présente invention vise à contrôler à chaque instant la poussée exercée par une fourchette de boîte de vitesses sur des moyens de synchronisation et de transmission de couple.

Dans ce but, elle propose qu'au moins un premier axe de passage soit actionné manuellement par le conducteur et un second axe de passage soit actionné par une unité motrice.

Par ailleurs, elle prévoit que les moyens de couplage élastique entre l'unité motrice et l'axe de passage correspondant soient constitués d'un premier flasque libre en rotation sur cet axe, d'un second flasque solidaire en rotation du même axe, et d'un ensemble de ressorts d'accouplement élastique entre les deux flasques.

Conformément à l'invention, les moyens de couplage comportent des moyens de repérage du premier et du second flasque permettant de contrôler à chaque instant la poussée exercée par la fourchette sur les moyens de synchronisation et de transmission de couple.

Les moyens de couplage élastiques entre un premier axe de passage de la boîte et son unité motrice, peuvent par exemple concerner les rapports de deuxième et de quatrième.

De préférence la position neutre de la fourchette est donnée par un capteur de position angulaire d'un flasque appartenant aux moyens de couplage.

La poussée de la fourchette peut par exemple être évaluée par un capteur de position angulaire relative des deux flasques, et le capteur de position neutre peut comporter un piston coopérant avec un cran d'un des deux flasques.

Des moyens de couplage élastiques similaires peuvent être prévus entre un deuxième axe de passage de la boîte et son unité motrice, et concerner par exemple les rapports de troisième et de cinquième. Ils sont alors munis des mêmes moyens de repérage.

Selon un mode de réalisation particulier de l'invention, un troisième axe de passage pour les rapports de première et marche arrière n'est pas muni d'actionneur mais d'un simple levier permettant le branchement d'un câble ou d'une tringlerie de commande de liaison avec un levier de commande dans l'habitacle.

L'engagement des rapports de marche arrière et de première sont alors réalisés manuellement, et sont interprétés par l'unité de gestion de la boîte, comme une intention du conducteur, de se diriger en marche avant ou en marche arrière.

L'engagement du rapport de première est alors interprété par l'unité de gestion des passages des vitesses, comme une intention de passer en marche avant.

Les moyens de couplage du pignon de première permettent avantageusement de laisser le baladeur en position engagée quelque soit le rapport de marche avant en action.

Selon d'autres caractéristiques de l'invention, l'unité de gestion des passages des vitesses peut être désactivée lors du passage manuel de la marche arrière, elle peut actionner seulement le coupleur de deuxième pour passer du rapport de première au rapport de deuxième, et actionner seulement le coupleur de seconde pour passer du rapport de seconde au rapport de première.

Enfin, l'unité de gestion des passages des vitesses peut actionner simultanément les deux coupleurs du groupe de deuxième/quatrième et de troisième/cinquième pour réaliser les passages deuxième/troisième, troisième/quatrième et quatrième/cinquième, et permet de réaliser des changements de rapport sous couple.

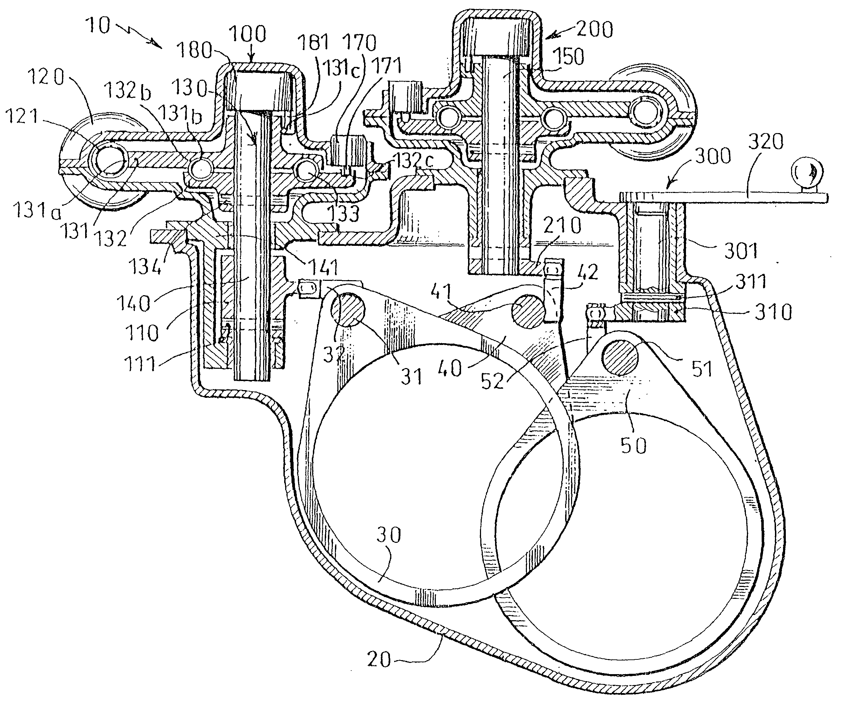

D'autres caractéristiques et avantages de la présente invention apparaîtront clairement à la lecture de la description suivante d'un mode de réalisation particulier de celle-ci, en liaison avec la figure unique.

Sur la figure on voit l'ensemble du dispositif de commande 10 d'une boîte de vitesses, comportant un carter 20, contenant une première fourchette 30 de commande du baladeur des rapports de deuxième et de quatrième. La fourchette 30 est portée par un axe 31 comprenant un crabot 32 en liaison avec un premier dispositif de commande 100 par l'intermédiaire du doigt 110.

Le dispositif de commande comprend une deuxième fourchette 40 de commande du baladeur des rapports de troisième et de cinquième. La fourchette 40 est portée par un axe 41 comprenant un crabot 42 en liaison avec un deuxième dispositif de commande 200 par l'intermédiaire du doigt 210.

Une troisième fourchette 50 commande le baladeur des rapports de première et de marche arrière. Elle est portée par un axe 51 comprenant un crabot 52 en liaison avec un dispositif de commande 300 par l'intermédiaire du doigt 310.

La boîte comprenant deux mécanismes d'actionnement électriques identiques, seul le premier 100 est décrit ci-dessous.

Le mécanisme 100 comprend une source d'énergie, constituée d'un moteur électrique 120. Le moteur 120 porte sur son axe un filet 121 constituant avec une roue dentée 131a un réducteur à vis sans fin. La roue dentée 131a est un secteur angulaire porté par le flasque d'entrée 131 du système d'accouplement élastique 130.

Le flasque 131, guidé par un axe 140 porté par le carter inférieur 141, est libre en rotation par rapport à cet axe. L'accouplement élastique, entre les flasques d'entré 131 et de sortie 132, est réalisé par des ressorts 133 disposés dans des évidements 131b et 132b des deux flasques et disposées en vis-à-vis. Le flasque de sortie 132, également guidé par l'axe, 140 est lié en rotation par une goupille 134.

L'axe 140 s'étend en partie à l'intérieur de la boîte, et supporte un doigt 110, lié en rotation par la goupille 111. En tournant et en coopérant avec le crabot 32, le doigt 110 assure le déplacement axial de l'axe 31 et de la fourchette 30, qui agit sur un baladeur non représenté.

Le positionnement angulaire précis en position neutre ou au repos du doigt de commande 110, et par conséquent de la fourchette 30 est déterminé par l'état électrique du contacteur 170, dont le piston 171 coopèrent avec le cran 132c du flasque de sortie 132.

L'état de tension de l'accouplement élastique, et par conséquent, la poussée axiale exercée par la fourchette, est donné par l'état électrique du capteur de position relative 180, porté par l'axe 140. Le capteur 180 est lié en rotation, d'une part à l'axe 40 par des cannelures ou par tout autre moyen équivalent, et d'autre part lié au flasque d'entrée 131 par l'intermédiaire du curseur 181 coopérant avec la rainure 131c solidaire du flasque 131. L'écart de position angulaire relative est mesurée par le capteur, ou potentiomètre 180, coopérant avec ces derniers.

Conformément à l'invention, la boîte comporte donc des moyens de repérage du premier et du second flasque permettant de contrôler à chaque instant la poussée exercée par la fourchette sur les moyens de synchronisation et de transmission de couple.

Lorsque le système d'accouplement élastique tourne pour rattraper les jeux, le capteur de position relative 180 indique une absence de tension des ressorts, alors qu'un capteur de position neutre 170 indique que cette dernière a été quittée.

La position neutre de la fourchette est donc donnée par un capteur de position angulaire 170 du deuxième flasque 132, tandis que la poussée de la fourchette est évaluée par un capteur de position angulaire relative 180 des deux flasques 131 et 132.

De plus, comme indiqué plus haut, le synchroniseur commandé par la fourchette 30 peut avantageusement être du type, à poussée axiale sans crabotage, dans lequel la synchronisation et la transmission de couple sont obtenues uniquement par adhérence de surfaces de friction.

Le deuxième mécanisme de commande 200 de la fourchette des rapports de troisième et de cinquième 40 est en tout point similaire au dispositif de commande de la fourchette des rapports de seconde et de quatrième 30.

Les deux mécanismes sont indépendants et peuvent fonctionner, de manière séparée ou simultanée, à partir des consignes d'une unité de gestion centrale.

Dans le cas particulier où ces mécanismes sont combinés avec les coupleurs coniques capables de transmettre le couple du moteur sans crabotage, tels que décrits dans la publication FR 2754 956, il est possible de réaliser un basculement du couple moteur d'un coupleur sur l'autre, et de réaliser des passages de vitesses sous couple.

Le troisième actionneur 300, est composé d'un axe 301 supporté par le carter 20, un doigt 310 lié à l'axe 301 par la goupille 311 coopérant avec le crabot 52 permettant d'actionner la fourchette 50 des rapports de première et de marche arrière. A l'extérieur, le levier 320 fixé à l'axe 301 est le lien avec un organe de commande (non représenté) de type manuel, à câble ou à tringle, permettant l'intervention directe du conducteur.

Cette partie est liée mécaniquement au levier de commande. Le choix du rapport de marche arrière par le conducteur se traduit par un mouvement du baladeur vers le pignon de marche arrière, et la liaison peut être réalisée par un dispositif de type coupleur conique, ou de type classique à crabot.

Le choix du rapport de première se traduit par un mouvement du baladeur vers le pignon de première. Conformément à l'invention, le baladeur est maintenu dans sa position de rapport de première engagée lorsque l'unité de gestion contrôlant les actionneurs déclenche le passage d'un autre rapport.

Ce type de liaison entre le pignon du premier rapport et l'arbre porteur peut être par exemple assurée par une roue libre, permettant avantageusement à l'unité de contrôle de considérer que le choix de l'engagement du rapport de première est équivalent au choix de l'engagement de tous les rapports de marche avant.

Selon un mode de réalisation préféré de l'invention, les axes de passage des second, troisième, quatrième, et cinquième rapport de marche avant peuvent donc être actionnés par des unités motrices, tandis que le premier rapport de marche avant et la marche arrière sont engagées manuellement par le conducteur.

Dans ce cas particulier, l'engagement du rapport de première est déclaré à une unité de contrôle comme une intention de passer en marche avant, tandis que les moyens de couplage du pignon de première permettent de laisser le baladeur de ce rapport en position engagée quelque soit le rapport de marche avant en action.

Par ailleurs, l'engagement manuel de la marche arrière désactive par l'intermédiaire de l'unité centrale, les actionneurs des autres axes de passage.

Ainsi, l'unité de gestion des passages des vitesses actionne seulement le coupleur du rapport de deuxième pour passer du rapport de première au rapport de deuxième, et elle actionne seulement le coupleur du rapport de deuxième pour passer du rapport de deuxième au rapport de première.

Enfin, cette l'unité de gestion actionne simultanément les deux coupleurs du groupe de seconde/quatrième et du groupe de troisième/cinquième pour réaliser les passages seconde/troisième , troisième/quatrième et quatrième/cinquième, et permet de réaliser des changements de rapport montants sous couple.

Globalement, l'invention présente de nombreux avantages sur le plan de la sûreté de fonctionnement, dans la mesure où une partie de la commande est manuelle et où l'autre partie est automatisée. De nombreux cas de défaillances des actionneurs ou de leur commande entraînant une immobilisation du véhicule sont ainsi résolus.

## Revendications

1. Boîte de vitesses mécanique (10) à actionneurs de passage, comprenant au moins deux axes de passage (140, 150, 301) reliés mécaniquement à des fourchettes (30, 40, 50) actionnant par l'intermédiaire de baladeurs des moyens de synchronisation et de transmission de couple, comprenant au moins une unité motrice (100, 200) capable de déplacer en rotation un axe de passage (140, 150), et des moyens de couplage élastique entre ladite l'unité motrice et l'axe de passage correspondant (140, 150) **caractérisée en ce que** cette boîte de vitesses comporte au moins un premier axe de passage (301) actionné manuellement par le conducteur pour engager le premier rapport de marche avant ou la marche arrière, et un second axe de passage (140, 150) actionné par une unité motrice (100, 200) pour engager d'autres rapports de marche avant.

2. Boîte de vitesses selon la revendication 1, **caractérisé en ce qu'**elle comporte trois axes de passage, dont deux axes de passage (140, 150) actionnés par des unités motrices (100, 200), et un axe de passage (301) actionné manuellement par le conducteur.

3. Boîte de vitesses selon la revendication 1 ou 2, **caractérisé en ce que** les axes de passage des second, troisième, quatrième, et cinquième rapport de marche avant sont actionnés par des unités motrices (100, 200).

4. Boîte de vitesses selon l'une des revendications précédentes **caractérisée en ce que** l'engagement du rapport de première est déclaré à une unité de contrôle comme une intention de marche avant du véhicule.

5. Boîte de vitesses, selon l'une des revendications précédentes, **caractérisée en ce que** les moyens de couplage du pignon de première permettent de laisser le baladeur de ce rapport en position engagée quel que soit le rapport de marche avant en action.

6. Boîte de vitesses, selon l'une des revendications précédentes, **caractérisée en ce que** l'engagement manuel de la marche arrière désactive, par l'intermédiaire de l'unité centrale, les actionneurs des autres axes de passage.

7. Boîte de vitesses, selon l'une des revendications précédentes, **caractérisée en ce que** l'unité de gestion des passages des vitesses actionne seulement le coupleur du rapport de deuxième pour passer du rapport de première au rapport de deuxième.

8. Boîte de vitesses, selon l'une des revendications précédentes, **caractérisée en ce que** l'unité de gestion des passages des vitesses actionne seulement le coupleur du rapport de deuxième pour passer du rapport de deuxième au rapport de première.

9. Boîte de vitesses, selon l'une des revendications précédentes, **caractérisée en ce que** l'unité de gestion des passages des vitesses actionne simultanément les deux coupleurs du groupe de seconde/quatrième et du groupe de troisième/cinquième pour réaliser les passages seconde/troisième ,troisième/quatrième et quatrième/cinquième, et permet de réaliser un changement de rapport montant dit sous couple.

## Patentansprüche

1. Mechanisches Getriebe (10) mit Schaltaktuatoren, das mindestens zwei Schaltwellen (140, 150, 301) aufweist, die mechanisch mit Gabeln (30, 40, 50) verbunden sind, welche über Schubglieder auf Anordnungen zur Synchronisation und zur Kraftübertragung einwirken, und das mindestens eine Antriebseinheit (100, 200) aufweist für den Drehantrieb einer Schaltwelle (140, 150), sowie eine elastische Kupplungsanordnung zwischen der Antriebseinheit und der zugehörigen Schaltwelle (140, 150) aufweist, **dadurch gekennzeichnet, dass** das Getriebe wenigstens eine erste, manuell durch den Fahrer betätigbare Schaltwelle (301) aufweist für das Einlegen des ersten Ganges in Vorwärtsrichtung oder des Rückwärtsganges, und eine zweite durch eine Antriebseinheit (100, 200) betätigbare Schaltwelle (140, 150) aufweist zum Einlegen der anderen Gänge in Vorwärtsrichtung.

2. Getriebe nach Anspruch 1, **dadurch gekennzeichnet, dass** es drei Schaltwellen aufweist, wobei zwei Schaltwellen (140, 150) durch Antriebseinheiten (100, 200) betätigbar sind und eine Schaltwelle (301) manuell durch den Fahrer betätigbar ist.

3. Getriebe nach Anspruch 1 oder 2, **dadurch gekennzeichnet, dass** die Schaltwellen für den zweiten, dritten, vierten und fünften Gang in Vorwärtsrichtung durch Antriebseinheiten (100, 200) betätigbar sind.

4. Getriebe nach einem der vorhergehenden Ansprüche, **dadurch gekennzeichnet, dass** das Einlegen des ersten Ganges einer der Antriebseinheiten als Absicht des Fahrers mitgeteilt wird, das Fahrzeug in Vorwärtsrichtung zu bewegen.

5. Getriebe nach einem der vorhergehenden Ansprüche, **dadurch gekennzeichnet, dass** das Kupplungsglied für das Ritzel des ersten Ganges ein Verbleiben des Schubgliedes für diesen Gang in der eingelegten Stellung ermöglicht, unabhängig vom tatsächlich eingelegten Gang in Vorwärtsrichtung.

6. Getriebe nach einem der vorhergehenden Ansprüche, **dadurch gekennzeichnet, dass** das manuelle Einlegen des Rückwärtsganges eine Deaktivierung der Aktuatoren für die anderen Schaltwellen mittels der zentralen Steuereinheit bewirkt.

7. Getriebe nach einem der vorhergehenden Ansprüche, **dadurch gekennzeichnet, dass** die zentrale Steuereinheit für das Einlegen der Gänge ausschließlich das Kupplungsglied des zweiten Ganges betätigt, um vom ersten Gang in den zweiten Gang zu schalten.

8. Getriebe nach einem der vorhergehenden Ansprüche, **dadurch gekennzeichnet, dass** die zentrale Steuereinheit für das Schalten der Gänge ausschließlich das Kupplungsglied des zweiten Ganges betätigt, um vom zweiten Gang in den ersten Gang zu schalten.

9. Getriebe nach einem der vorhergehenden Ansprüche, **dadurch gekennzeichnet, dass** die zentrale Steuereinheit für das Schalten der Gänge zugleich die beiden Kupplungsglieder der Gruppe des zweiten und vierten Ganges und der Gruppe des dritten und fünften Ganges betätigt für das Schalten der Gänge vom zweiten in den dritten Gang, vom dritten in den vierten Gang und vom vierten in den fünften Gang, wobei beim Hochschalten ein Schalten unter Last ermöglicht wird.

## Claims

1. Mechanical gearbox (10) with gear-shift actuating members, comprising at least two gear-shifting rods (140, 150, 301) mechanically connected to selector forks (30, 40, 50) that, by means of sliding gears, actuate means for synchronising and transmitting torque, comprising at least one drive unit (100, 200) capable of displacing a gear-shifting rod (140, 150) in a rotational manner, and means for elastic coupling between said drive unit and the corresponding gear-shifting rod (140, 150), **characterised in that** said gearbox comprises at least a first gear-shifting rod (301) manually actuated by the driver in order to engage the first forward gear or reverse, and a second gear-shifting rod (140, 150) actuated by a drive unit (100, 200) in order to engage other forward gears.

2. Gearbox according to claim 1, **characterised in that** it comprises three gear-shifting rods, two of which gear shifting rods (140, 150) are actuated by drive units (100, 200) and one gear-shifting rod (301) is manually actuated by the driver.

3. Gearbox according to claim 1 or 2, **characterised in that** the gear-shifting rods for the second, third, fourth and fifth forwards gears are actuated by drive units (100, 200).

4. Gearbox according to one of the preceding claims, **characterised in that** engagement of first gear is registered with a control unit as an intention of the vehicle to travel forwards.

5. Gearbox according to one of the preceding claims, **characterised in that** the means for coupling the first gear wheel allow the sliding gear for this gear to be left in the engaged position whatever the forward gear being employed.

6. Gearbox according to one of the preceding claims, **characterised in that** manual engagement of the reverse gear deactivates the actuators of the other gear-shifting rods by means of the central unit.

7. Gearbox according to one of the preceding claims, **characterised in that** gear-shifting management unit only actuates the second-gear coupling means in order to shift from first gear to second gear.

8. Gearbox according to one of the preceding claims, **characterised in that** the gear-shifting management unit only actuates the second-gear coupling means in order to change from first gear to second gear.

9. Gearbox according to one of the preceding claims, **characterised in that** the gear-changing management unit simultaneously actuates the two coupling means of the second/fourth group and the third/fifth group in order perform the second/third, third/fourth and fourth/fifth gear shifts, and allows so-called upward gear-shifting under torque.
